# EUROPEAN PATENT SPECIFICATION

(11) **EP 2 871 562 B1**
(45) Date of publication and mention of the grant of the patent: **21.02.2018**
(21) Application number: 13857480.1
(22) Date of filing: 05.07.2013
(51) Int. Cl.: H04N 5/77, G06F 3/048, H04M 1/725, H04M 1/656, H04N 9/82

(54) **METHOD AND DEVICE FOR RECORDING INFORMATION IN MOBILE TERMINAL**
VERFAHREN UND VORRICHTUNG ZUR AUFZEICHNUNG VON INFORMATIONEN AUF EINEM MOBILEN ENDGERÄT
PROCÉDÉ ET DISPOSITIF D'ENREGISTREMENT D'INFORMATIONS DANS UN TERMINAL MOBILE

(30) Priority: 23.11.2012 CN 201210484408
(43) Date of publication of application: 13.05.2015
(73) Proprietor: Xiaomi Inc., Beijing 100085 (CN)
(72) Inventor: LIU, Xiaohua, Beijing 100085 (CN); CHEN, Zhen, Beijing 100085 (CN); CHEN, Dongliang, Beijing 100085 (CN)
(74) Representative: Robson, Aidan John
(86) International application number: PCT/CN2013/078863
(87) International publication number: WO 2014/079217

(56) References cited:
- WO-A1-2011/098899
- CN-A- 102 340 595
- CN-A- 102 609 091
- CN-A- 102 938 808
- US-A1- 2009 287 449

## Description

### TECHNICAL FIELD

The present disclosure relates generally to the technical field of mobile terminals, and particularly to a method and apparatus for recording information in a mobile terminal.

### BACKGROUND

In mobile internet era, mobile terminals (such as mobile phones) not only act as communication tools, but also act the role of portable computers due to the continuous deepening of intelligentizing. People can surf on the internet, watch movies, watch TV programs, and etc., anytime anywhere by using mobile terminal devices. In addition, people can record some information, for example, record some text messages in a memorandum, or record some audio or video files for using later, etc.

With the conventional implementation manners, if a user needs to record during the call, he/she should switch the mobile phone back to its desktop, find the recording software, and then initiate the software to record. The above course is fussy, which not only impacts on the normal communication, but also delays the start of recording. Thus, the recording can not start in time, and the important contents which need to be recorded may be missed.

In the related art, in order to quickly initiate a recording function of a mobile terminal, a communication recording function button is provided on a housing of the mobile terminal, such that the user could swiftly initiate the call recording function of the mobile terminal. However, most of the existing intelligent mobile terminals adopt touch screens, and thus the number of the buttons on the housing of the mobile terminals is limited. Thereby, it is very difficult to separately provide a button for the recording function which is seldom used. In sum, in the related art, the intelligence for recording function of the mobile terminals needs to be improved. WO 2011/098899 A1 discloses a camera phone that detects a pre-defined motion that activates the phone's camera. If the user does not press the shutter release button after the detection of the pre-defined motion, the acquired images are discarded. US 2009/0287449 A1 discloses a portable device that detects an acceleration condition for a predetermined time period to start automatically recording audio. A shock sound wave is then searched in the recorded audio wave.

### SUMMARY

In view of the above-mentioned problems, embodiments of the present application provide methods and apparatuses for recording information by mobile terminals which could overcome or reduce the above-mentioned problems or at least solve part of the above-mentioned problems.

In one aspect, the embodiments of the present application provide a method for recording information in a mobile terminal, which comprises:
detecting an acceleration of the mobile terminal;
determining whether the acceleration reaches a preset acceleration threshold; and
initiating a recording function of the mobile terminal to record the information if the acceleration reaches the preset acceleration threshold.

Optionally, the method further comprise:
determining whether the mobile terminal is in a call state;
wherein, the step of initiating the recording function of the mobile terminal to record the information comprises:
if the mobile terminal is in the call state, initiating an audio recording function of the mobile terminal to record audio information of both sides of the call;
if the mobile terminal is not in the call state, initiating an audio input device of the mobile terminal, and initiating the audio recording function of the mobile terminal to record the audio information received by the audio input device; and/or initiating a camera device of the mobile terminal, and initiating a video recording function of the mobile terminal to record video information received by the camera device.

Optionally, the method further comprise:
saving the recorded information after the end of the call.

Optionally, the method further comprise:
stopping the recording after a preset first time threshold from a start of the recording, and saving the recorded information; or
stopping the recording when a residual electric quantity of the mobile terminal is lower than a preset electric quantity threshold, and saving the recorded information.

Optionally, the method further comprise:
sending the saved information to a preset position.

Optionally, the method further comprise:
sending a reminder message of whether to send the information to the user, and if the user selects to send the information or no selection message is received from the user within a preset second time threshold, triggering an operation of sending the saved information to the preset position.

Optionally, the method further comprise:
saving the recorded information after a preset third time threshold, from the start of the recording, and sending the saved information to the preset position.

Optionally, the step of sending the saved information to the preset position comprises:
sending the saved information to a designated mailbox as an enclosure; or
sending the saved information to a designated mobile terminal.

In another aspect, the embodiments of the application provide an apparatus for recording information in a mobile terminal, which comprises:
an acceleration detecting unit for detecting an acceleration of the mobile terminal;
an acceleration determining unit for determining whether the acceleration reaches a preset threshold;
a recording function initiating unit for initiating a recording function of the mobile terminal to record the information if the acceleration determining unit determines that the acceleration reaches a preset threshold.

Optionally, the apparatus further comprise:
a call state determining unit for determining whether the mobile terminal is in a call state;
wherein, the recording function initiating unit comprises:
a first initiating subunit for initiating an audio recording function of the mobile terminal to record audio information of both sides of the call when the mobile terminal is in the call state; and
a second initiating subunit for initiating an audio input device of the mobile terminal and initiating the audio recording function of the mobile terminal to record the audio information received by the audio input device; and/or initiating a camera device of the mobile terminal and initiating a video recording function of the mobile terminal to record video information received by the camera device when the mobile terminal is not in the call state.

Optionally, the apparatus further comprise:
a first saving unit for saving the recorded information after the end of the call.

Optionally, the apparatus further comprise:
a second saving unit for stopping the recording after a preset first time threshold from a start of the recording, and saving the recorded information; or
a third saving unit for stopping the recording when a residual electric quantity of the mobile terminal is lower than a preset electric quantity threshold, and saving the recorded information.

Optionally, the apparatus further comprise:
a sending unit for sending the saved information to a preset position.

Optionally, the apparatus further comprise:
a reminder unit for sending a reminder message of whether to send the information to a user, and triggering an operation of sending the saved information to the preset position if the user selects to send the information or no selection message is received from the user within a preset second time threshold.

Optionally, the apparatus further comprise:
a partition saving and sending unit for saving the recorded information after a preset third time threshold, from the start of the recording, and sending the saved information to the preset position.

Optionally, the saved information is sent to the preset position by using the following units:
a first sending unit for sending the saved information to a designated mailbox as an enclosure; or
a second sending unit for sending the saved information to a designated mobile terminal.

In another aspect, the embodiments of the application provide a computer program which, when executing on a processor of a mobile terminal, performs the above method for recording information in the mobile terminal

According to the methods and apparatus for recording information in a mobile terminal of the present application, a recording function of the mobile terminal can be automatically initiated when the mobile terminal having a higher acceleration is detected. Thereby, the recording function can be quickly initiated without adding a special button on a limited area of the housing of the mobile terminal, which is more suitable for the mobile terminals having touch screens. From a user's view, if the user wants to initiate the recording function, he/she could shake the mobile terminal violently and then the recording function can be initiated automatically without the operation of looking for the relevant software for initiating from the user interface, such that the quickness of the operation could be ensured.

The above depictions are only an overview of the technical solutions of the embodiments of the present application. In order that the technical means of the present application can be understood more clearly so as to implement the technical means based on the contents in the description, and to make the above and other objects, features and advantages of the present application to be more apparent, the embodiments of the present application are particularly exemplified as follows.

### BRIEF DESCRIPTION OF THE DRAWING

In order to clearly explain the technical solutions in the prior art and the embodiments of the present application, a brief introduction to the drawings used for the embodiments are given below. Obviously, the drawings described below only illustrate some of the embodiments of the present application, and the skilled in the art could acquire other drawings based on these drawings without inventive labour.
FIG. 1 is a flowchart illustrating a method according to the first embodiment of the present application.
FIG. 2 is a flowchart illustrating a method according to the second embodiment of the present application.
FIG. 3 is a flowchart illustrating a method according to the third embodiment of the present application.
FIG. 4 is a flowchart illustrating a method according to the fourth embodiment of the present application.
FIG. 5 shows a schematic diagram of an apparatus according to one embodiment of the present application.
FIG. 6 shows a schematic diagram of an apparatus according to another embodiment of the present application.

### DETAILED DESCRIPTION

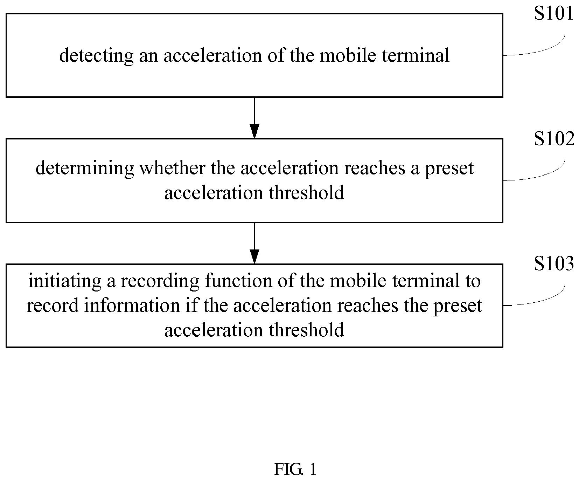

In order to improve the intelligence for recording information in a mobile terminal, the embodiments of the present application provide technical solutions for quickly initiating a recording function of a mobile terminal. Referring to FIG. 1, one embodiment of the present application provides a method for recording information in a mobile terminal, which may include the following steps:

S101: detecting an acceleration of the mobile terminal.

In an embodiment of the present application, the recording function of the mobile terminal may be initiated according to the acceleration of the mobile terminal. That is, in case that the acceleration of the mobile terminal satisfies a certain condition, the recording function of the mobile terminal may be initiated automatically without manual operation by a user. For example, if the user needs to record the communications during a call, he/she may shake the mobile phone violently so that the mobile phone could have a high acceleration, and then a recording program in the mobile phone runs in the background to record the current communications if the program in the mobile phone detects that the acceleration of the mobile phone is high enough. In practice, an acceleration sensing device may be used to detect the acceleration of the mobile terminal. The acceleration sensing device may be a device similar to acceleration sensors which are electronic devices capable of measuring accelerating force (i.e., force acting on an object during its acceleration process). That is, the acceleration of the mobile terminal may be detected by the acceleration sensors built inside or outside the mobile terminal. When the mobile terminal is at rest or moves at a constant speed along with the user, the acceleration detected by the acceleration sensor is zero; and if the mobile terminal changes its state from a stationary state to a motion state or from a motion state to a stationary state, or alters its movement velocity during the movement, the acceleration detected by the acceleration sensor is higher than zero. Thereby, when the user shakes the mobile terminal violently or falls from a height with the mobile terminal, etc., a value of the acceleration detected by the acceleration sensor might be high.

S102: determining whether the acceleration reaches a preset threshold.

After detecting the value of the acceleration of the mobile terminal, in order to qualitatively determine the magnitude of the value of the acceleration, a threshold may be set in advance. If the value of the acceleration is higher than the threshold, the acceleration of the mobile terminal is deemed to be high; otherwise, if the value of the acceleration is less than the threshold, the acceleration of the mobile terminal is deemed to be low. The value of the threshold may be set according to actual requirements. If the threshold is set to be high, the sensitivity is low, i.e., a slight acceleration or deceleration motion can not trigger an initiation of the recording function; conversely, if the threshold is set to be low, the sensitivity is high. In the embodiments of the present application, if it is desired that the recording function can be only initiated when it is determined that the detected acceleration is induced by a voluntary action of the user, a proper threshold may be set for determining whether the increase of the acceleration is induced by a voluntary action of the user. For example, the circumstances in which the acceleration along any axis of x, y and z is generally higher than 14 could be regarded as a shaking operation performed by the user.

S103: initiating a recording function of the mobile terminal to record information if the acceleration reaches the preset acceleration threshold.

If it is detected that the acceleration of the mobile terminal is higher than the preset threshold, which indicates that the user either shakes the mobile terminal, or meets with an accident such as falling down from a height, the recording function of the mobile terminal may be initiated automatically.

From above, in the embodiments of the present application, the recording function of the mobile terminal may be initiated automatically when it is detected that the acceleration of the mobile terminal is high. Thereby, the recording function may be initiated quickly without adding a special button on a limited area of the housing of the mobile terminal, which is more suitable for the mobile terminals having touch screens. From a user's view, if the user wants to initiate the recording function, he/she could shake the mobile terminal violently and then the recording function can be initiated automatically without the operation of looking for the relevant software from the user interface and initiating it, such that the quickness of the operation could be ensured.

In actual applications, the initiated recording program and the recorded specific contents may be different depending on different status of the mobile terminal when high acceleration is generated. Thereby, in addition to the acceleration of the mobile terminal, it is also possible to detect whether the mobile terminal is in a call state. According to the acceleration of the mobile terminal and the detection results of the call state, it can be determined that which recording function(s) shall be initiated and what information shall be recorded. Hereinafter, the introduction for this will be given in detail.

Firstly, if it is detected that the acceleration is high and the mobile terminal is in a call state, which indicates that the user needs to record the communications during the call, the recording software may be initiated and the speech of both sides of the call may be recorded, i.e., the local speech of the current user received by an audio input device (such as a MIC) of the mobile terminal and the remote speech of the opposite side of the call are recorded. After the end of the call, the recorded contents may be saved, for example, the recorded contents may be saved as local files. Alternatively, the obtained files may be sent to a predefined position, for example, the obtained files may be sent to a designated mailbox as enclosures, or may be sent to other designated mobile terminals, etc. Before they are sent to a predefined position, it is also possible to inquiry the user whether it is necessary to send the files. If the user selects that it is necessary to send the files, the files may be sent. It should be explained, the existing technique may be referred to in the implementations on how the recording software records the speech of both sides of the call, which is not described here.

If it is detected that the acceleration is high and the mobile terminal is not in a call state, which indicates that the user might meet with an accident, such as falling down from a height, the audio input device of the mobile terminal may be initiated automatically, and the audio recording function of the mobile terminal may be also initiated to record the audio information received by the audio input device; alternatively, a camera device of the mobile terminal may be initiated also, and the video audio recording function of the mobile terminal may be initiated to record the video information received by the camera device, such that the audio information and video information on the scene could be recorded. It should be explained, after the initiation of the camera device, it is also possible to determine whether the camera keeps in dark during a period of time. If yes, which indicates that the camera device may be shaded and thus can not capture valid pictures, it is unnecessary to record these video information to avoid an unwanted waste of the electric energy. Certainly, under the circumstance of non-call state, an ending point of the recording may be provided according to actual requirements, and the recorded contents are saved as files. For example, a first time threshold may be preset, and when the first time threshold (such as 5 minutes) passes from the start of the recording, the recording stops automatically, and the recorded contents are saved; alternatively, the timing at which the recording is stopped may be also determined based on the electric quantity. For example, the recording may stop when the residual electric quantity of the mobile terminal is lower than 20%, and the recorded contents are saved, etc.

In the above condition, the user probably meets with an incident. Thereby, in order to notify other users, it is also possible to send the recorded files to a designated position after the end of the recording. Similarly, the recorded files may be sent to a designated mailbox in a form of enclosure, or may be sent to other designated mobile terminals, etc. Certainly, before the recorded files are sent, it is also possible to inquiry the user whether it is necessary to send the files. If the user selects that it is necessary to send the files, the files may be sent; and if not, it is unnecessary to send the files. In addition, If the selection information is not received from the user within a second time threshold (such as 10 seconds, etc.), i.e., the user does not select whether it is necessary to send the files, which indicates that the user has no time to attend to this matter, or the user may be wounded and thus can not perform a selection operation, etc., the recorded files may be automatically sent to the designated position.

In addition, in order to send the recorded contents in time, or avoid the situation of unable to send them when the electric quantity is exhausted or too low, in the embodiments of the present application, it is also possible to save the recorded information every a preset third time threshold (such as every 1 minute), from the start of the recording, and send the saved information to the designated positions.

It should be explained, whether a mobile terminal is in a call state can be determined according to the message broadcasted by the operation system of the mobile terminal. Generally, the operation system in a mobile terminal may open some interfaces for application programs, such that the application programs may obtain the required message from the system through the interfaces. Thereby, in the embodiments of the present application, in order to be capable of detecting whether a mobile terminal is in a call state, the application programs in the embodiments of the present application may be registered in the operation system by taking advantage of this characteristic of the operation system of the mobile terminal. Thus, when the operation system broadcasts a notification message, application programs could receive such notification massage and obtain the required information therefrom. For instance, when receiving a call, the operation system of the mobile terminal may broadcast this call message, and thus the application programs could monitor this event. Alternatively, when the user makes a call, the system may broadcast the message of making a call to the application programs after the user presses down the "calling" button, and thus the application programs could also monitor the event of the calling. Similarly, when the user hangs up a call, the system may also broadcast this message. In conclusion, in the embodiments of the present application, whether the mobile terminal is in a call state may be obtained from the message broadcasted by the system.

For better understanding the method for recording information in a mobile terminal provided by the embodiments of the present application, introductions are given below by several examples in actual applications.

### EXAMPLE 1

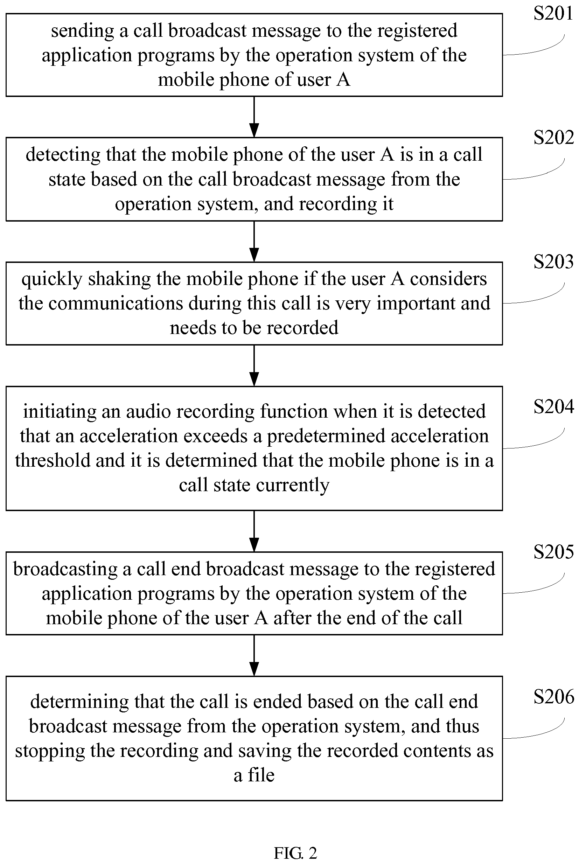

Referring to FIG. 2, providing that a user A receives a call, the method for recording information in a mobile terminal provided by the embodiments of the present application may include the following steps:
S201: sending a call broadcast message to registered application programs by the operation system of the mobile phone of the user A;
S202: detecting that the mobile phone of the user A is in a call state based on the call broadcast message, and recording it;
S203: quickly shaking the mobile phone if the user A considers the communications during this call is very important and needs to be recorded;
S204: initiating an audio recording function to record the communications of both sides of the call when an acceleration sensor built inside the mobile phone detects that an acceleration of the mobile phone exceeds a predetermined acceleration threshold and it is determined based on the information recorded previously that the mobile phone is in a call state currently;
S205: broadcasting a call end broadcast message to the registered application programs by the operation system of the mobile phone of the user A after the end of the call;
S206: determining that the call is ended based on the call end broadcast message from the operation system, and thus stopping the recording and saving the recorded contents as a file.

The method for recording information in a mobile terminal provided by the embodiments of the present application may quickly initiate the audio recording function to record the communications during the call.

### EXAMPLE 2

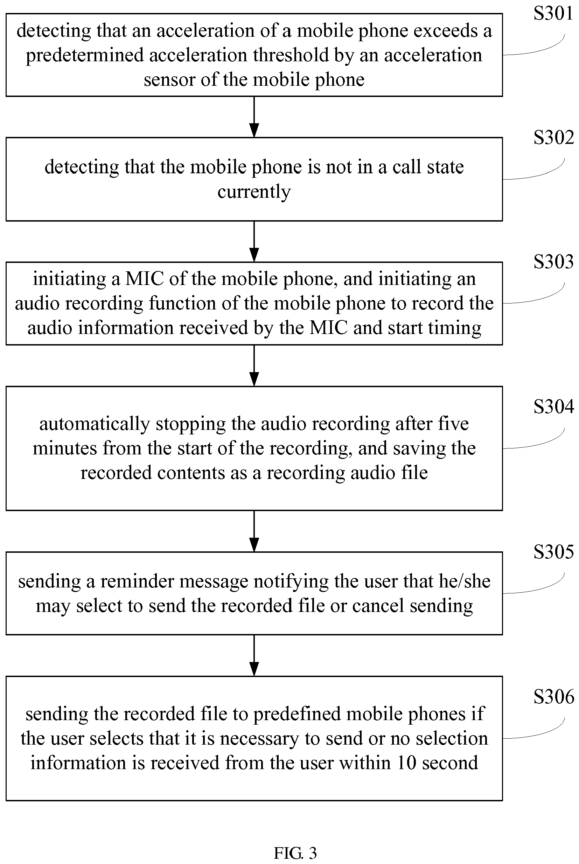

Referring to FIG. 3, providing that an old man falls down from a bus when getting on or off the bus, the method for recording information in a mobile terminal provided by the embodiments of the present application may include the following steps:
S301: detecting that an acceleration of a mobile phone exceeds a predetermined acceleration threshold by an acceleration sensor of the mobile phone;
S302: detecting that the mobile phone is not in a call state currently since no call broadcast message is received from the operation system of the mobile phone after the end of the last call;
S303: initiating an audio input device MIC of the mobile phone, and initiating an audio recording function of the mobile phone to record the audio information received by the MIC and start timing;
S304: automatically stopping the audio recording after five minutes from the start of the recording, and saving the recorded contents as a recording audio file;
S305: sending a reminder message notifying the user that he/she may select to send the recorded file or cancel sending;
S306: sending the recorded file to predefined mobile phones (such as the mobile phones of the children of the old man) if the user selects that it is necessary to send or no selection information is received from the user within 10 seconds; or sending the recorded file automatically.

The method for recording information in a mobile terminal provided by the embodiments of the present application may automatically record and send the field situations without manual operation.

### EXAMPLE 3

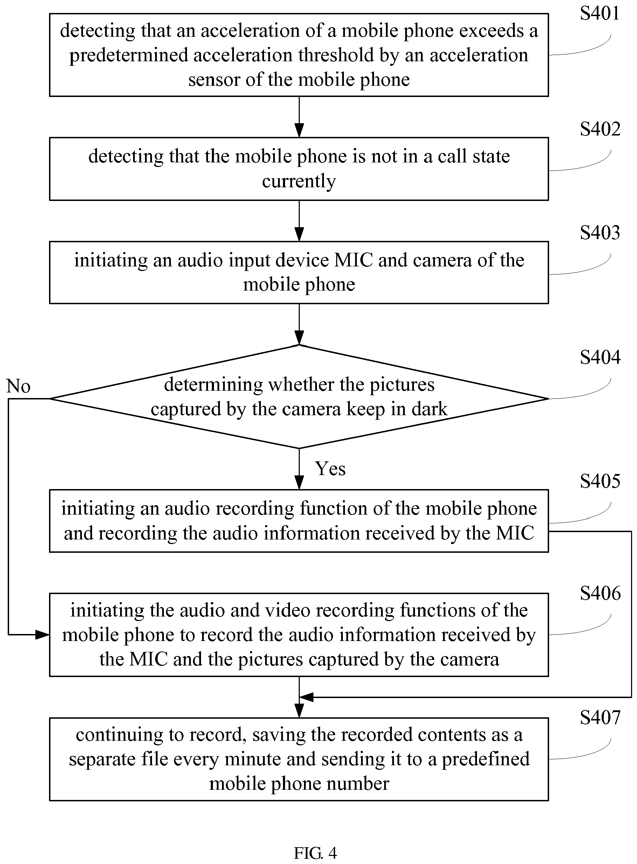

Referring to FIG. 4, providing that someone has a traffic accident and is crashed violently, the method for recording information in a mobile terminal provided by the embodiments of the present application may include the following steps:
S401: detecting that an acceleration of the mobile phone exceeds a predetermined acceleration threshold by an acceleration sensor of the mobile phone;
S402: detecting that the mobile phone is not in a call state currently since no call broadcast message is received from the operation system of the mobile phone after the end of the last call;
S403: initiating an audio input device MIC and camera of the mobile phone;
S404: determining whether the pictures captured by the camera keep in dark, and if yes, the process goes to step S405; and if no, the process goes to step S406;
S405: initiating an audio recording function of the mobile phone and recording the audio information received by the MIC;
S406: initiating the audio and video recording functions of the mobile phone to record the audio information received by the MIC and pictures captured by the camera;
S407: continuing to record, saving the recorded contents as a separate file every minute and sending it to a predefined mobile phone number (such as the mobile phone numbers of his/her relatives).

The method for recording information in a mobile terminal provided by the embodiments of the present application may automatically record the field situations and separate it into a plurality of files to be sent to a designated position without manual operation, such that the situation of unable to send the recorded files due to exhaust of the electric quantity etc., can be avoided.

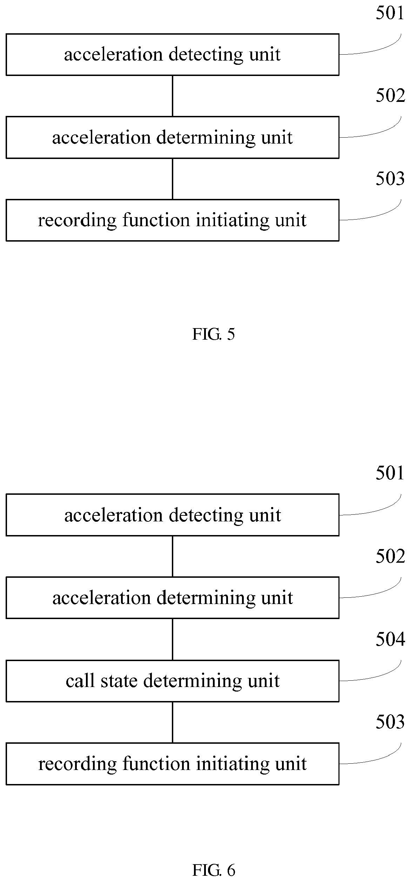

Corresponding to the method for recording information in a mobile terminal provided by the embodiments of the present application, the embodiments of the present application also provide an apparatus for recording information in a mobile terminal. Referring to FIG. 5, the apparatus may include:
an acceleration detecting unit 501 for detecting an acceleration of the mobile terminal;
an acceleration determining unit 502 for determining whether the acceleration reaches a preset threshold;
a recording function initiating unit 503 for initiating a recording function of the mobile terminal to record the information if the acceleration determining unit determines that the acceleration reaches the preset threshold.

In actual applications, referring to FIG. 6, the apparatus may further include:
a call state determining unit 504 for determining whether the mobile terminal is in a call state.
accordingly, the recording function initiating unit 503 may particularly include:
a first initiating subunit for initiating an audio recording function of the mobile terminal to record audio information of both sides of the call when the mobile terminal is in a call state.

Meanwhile, the apparatus may further include:
a first saving unit for saving the recorded information after the end of the call.

Alternatively, the recording function initiating unit 503 may further include:
a second initiating subunit for initiating an audio input device of the mobile terminal and initiating the audio recording function of the mobile terminal to record the audio information received by the audio input device; or initiating a camera device of the mobile terminal and initiating a video recording function of the mobile terminal to record video information received by the camera device.

The apparatus may further include:
a second saving unit for stopping a recording after a preset first time threshold from the start of the recording, and saving the recorded information; or
a third saving unit for stopping the recording when a residual electric quantity of the mobile terminal is lower than a preset electric quantity threshold, and saving the recorded information.

Since the above-mentioned situation indicates that a certain accident might be taken place, the apparatus may further include:
a sending unit for sending the saved information to a preset position.

In one specific embodiment, the apparatus may further include:
a reminder unit for sending a reminder message of whether to send the information to the user, and triggering an operation of sending the saved information to the preset position if the user selects to send the information or no selection message is received from the user within a preset second time threshold.

In addition, the apparatus may further include:
a partition saving and sending unit for saving the recorded information every a preset third time threshold, from the start of the recording, and sending the saved information to the preset position.

The saved information may be sent to the preset position by using the following units:
a first sending unit for sending the saved information to a designated mailbox as an enclosure; or
a second sending unit for sending the saved information to a designated mobile terminal.

It should be explained, in actual applications, the apparatus for recording information in a mobile terminal may be an separate application program which interacts messages or commands with the application programs such as audio recording program, video recording program, etc., though interfaces; alternatively, the apparatus for recording information in a mobile terminal may be built inside the application programs such as audio recording program, video recording program, etc., which equals to improve the existing functions of the application programs such as audio recording program and video recording program, and thus the intelligence of the mobile terminal can be improved.

In sum, with the above-mentioned apparatus provided by the embodiments of the present application, the recording function of a mobile terminal can be automatically initiated when it is detected that the mobile terminal has a high acceleration. Thus, it is unnecessary to add a special button on a limited area of the housing of the mobile terminal, which is more suitable for the mobile terminals having touch screens. From a user's view, if the user wants to initiate the recording function, he/she could shake the mobile terminal violently and then the recording function can be initiated automatically without the operation of looking for the relevant software for initiating from the user interface, such that the quickness of the operation could be ensured.

The algorithms and display provided here are not inherently relevant to any specific computer, virtual system or other devices. A variety of general purpose system may be used together with the teaching here. According to the above depiction, the structure required for configuring these kinds of systems is obvious. In addition, the present application does not aim at any specific programming language. It should be understood, the contents of the present application described here may be realized by using kinds of programming language, and the depiction with respect to a specific language mentioned above is to disclose the embodiments of the present application.

Each component in the embodiments of the present application may be implemented by hardware, or may be implemented by software module running on one or more processors, or may be implemented by their combination. The skilled in the art should understand, in practice, some of or all of the functions of some of or all of the components in the apparatus for recording information in a mobile terminal in the embodiments of the present application may be implemented by using processor or digital signal processor (DSP). The present application may be implemented as apparatus or device programs (such as computer program and computer program product) for performing a part of or all of the method described here. Such programs for implementing the present application may be stored in a computer-readable media, or may be in a form of having one or more signals. Such signals may be obtained by downloading from the websites of Internet, or may be provided on carrier signals, or may be provided in any other forms.

## Claims

1. A method for recording information in a mobile terminal, **characterized in that**, the method comprises::
detecting an acceleration (S101) of the mobile terminal;
determining (S102) whether the acceleration reaches a preset acceleration threshold; and
initiating (S103) a recording function of the mobile terminal to record the information if the acceleration reaches the preset acceleration threshold;
**characterised by** determining (S202) whether the mobile terminal is in a call state;
wherein, the step of initiating the recording function of the mobile terminal to record the information comprises:
if the mobile terminal is in the call state, initiating an audio recording function of the mobile terminal to record audio information of both sides of the call;
if the mobile terminal is not in the call state, initiating an audio input device of the mobile terminal, and initiating the audio recording function of the mobile terminal to record the audio information received by the audio input device.

2. The method according to claim 1, further comprising:
saving the recorded information after the end of the call.

3. The method according to claim 1 or 2, further comprising:
stopping the recording after a preset first time threshold from a start of the recording, and saving the recorded information; or
stopping the recording when a residual electric quantity of the mobile terminal is lower than a preset electric quantity threshold, and saving the recorded information.

4. The method according to any one of claims 1-3, further comprising:
sending the saved information to a preset position.

5. The method according to claim 1 or 4, further comprising:
sending a reminder message of whether to send the information to a user, and if the user selects to send the information or no selection message is received from the user within a preset second time threshold, triggering an operation of sending the saved information to the preset position.

6. The method according to claim 1, further comprising:
saving the recorded information after a preset third time threshold, from the start of the recording, and sending the saved information to the preset position.

7. The method according to any one of claims 5-6, wherein the step of sending the saved information to the preset position comprises:
sending the saved information to a designated mailbox as an enclosure; or
sending the saved information to a designated mobile terminal.

8. An apparatus for recording information in a mobile terminal, the apparatus comprises::
an acceleration detecting unit (501) for detecting an acceleration of the mobile terminal;
an acceleration determining unit (502) for determining whether the acceleration reaches a preset threshold;
a recording function initiating unit (503) for initiating a recording function of the mobile terminal to record the information if the acceleration determining unit determines that the acceleration reaches the preset threshold;
**characterised by** a call state determining unit (504) for determining whether the mobile terminal is in a call state;
wherein, the recording function initiating unit (503) comprises:
a first initiating subunit for initiating an audio recording function of the mobile terminal to record audio information of both sides of the call when the mobile terminal is in the call state; and
a second initiating subunit for initiating an audio input device of the mobile terminal and initiating the audio recording function of the mobile terminal to record the audio information received by the audio input device.

9. The apparatus according to claim 8, further comprising:
a first saving unit for saving the recorded information after the end of the call.

10. The apparatus according to claim 8 or 9, further comprising:
a second saving unit for stopping the recording after a preset first time threshold from a start of the recording, and saving the recorded information; or
a third saving unit for stopping the recording when a residual electric quantity of the mobile terminal is lower than a preset electric quantity threshold, and saving the recorded information.

11. The apparatus according to claim 9 or 10, further comprising:
a sending unit for sending the saved information to a preset position.

12. The apparatus according to any one of claims 9-11, further comprising:
a reminder unit for sending a reminder message of whether to send the information to a user, and triggering an operation of sending the saved information to the preset position if the user selects to send the information or no selection message is received from the user within a preset second time threshold.

13. A computer program, which when executing on a processor of a mobile terminal of claim 8, performs a method according to any one of claims 1-7.

## Patentansprüche

1. Verfahren zum Aufzeichnen von Informationen in einem mobilen Endgerät, **dadurch gekennzeichnet, dass** das Verfahren Folgendes beinhaltet:
Erkennen einer Beschleunigung (S101) des mobilen Endgeräts;
Feststellen (S102), ob die Beschleunigung eine voreingestellte Beschleunigungsschwelle erreicht; und
Starten (S103) einer Aufzeichnungsfunktion des mobilen Endgeräts zum Aufzeichnen der Informationen, wenn die Beschleunigung die voreingestellte Beschleunigungsschwelle erreicht;
**gekennzeichnet durch** Feststellen (S202), ob das mobile Endgerät in einem Anrufzustand ist;
wobei der Schritt des Startens der Aufzeichnungsfunktion des mobilen Endgeräts zum Aufzeichnen der Informationen Folgendes beinhaltet:
Starten, wenn das mobile Endgerät im Anrufzustand ist, einer Audioaufzeichnungsfunktion des mobilen Endgeräts zum Aufzeichnen von Audioinformationen auf beiden Seiten des Anrufs;
Starten, wenn das mobile Endgerät nicht im Anrufzustand ist, einer Audioeingabevorrichtung des mobilen Endgeräts und Starten der Audioaufzeichnungsfunktion des mobilen Endgeräts zum Aufzeichnen der von der Audioeingabevorrichtung empfangenen Audioinformationen.

2. Verfahren nach Anspruch 1, das ferner Folgendes beinhaltet:
Speichern der aufgezeichneten Informationen nach Ende des Anrufs.

3. Verfahren nach Anspruch 1 oder 2, das ferner Folgendes beinhaltet:
Stoppen der Aufzeichnung nach einer voreingestellten ersten Zeitschwelle ab Beginn der Aufzeichnung und Speichern der aufgezeichneten Informationen; oder
Stoppen der Aufzeichnung, wenn eine Reststrommenge des mobilen Endgeräts niedriger ist als eine voreingestellte Strommengenschwelle, und Speichern der aufgezeichneten Informationen.

4. Verfahren nach einem der Ansprüche 1-3, das ferner Folgendes beinhaltet:
Senden der gespeicherten Informationen zu einer voreingestellten Position.

5. Verfahren nach Anspruch 1 oder 4, das ferner Folgendes beinhaltet:
Senden einer Erinnerungsnachricht, ob die Information zu einem Sender zu senden ist, und Auslösen, wenn der Benutzer wählt, die Information zu senden oder wenn innerhalb einer vorbestimmten zweiten Zeitschwelle keine Auswahlnachricht vom Benutzer empfangen wird, eines Vorgangs des Sendens der gespeicherten Information zu der voreingestellten Position.

6. Verfahren nach Anspruch 1, das ferner Folgendes beinhaltet:
Speichern der aufgezeichneten Information nach einer voreingestellten dritten Zeitschwelle ab dem Beginn des Aufzeichnens und Senden der gespeicherten Information zu der voreingestellten Position.

7. Verfahren nach einem der Ansprüche 5-6, wobei der Schritt des Sendens der gespeicherten Information zu der voreingestellten Position Folgendes beinhaltet:
Senden der gespeicherten Information zu einer designierten Mailbox als Anhang; oder
Senden der gespeicherten Information zu einem designierten mobilen Endgerät.

8. Vorrichtung zum Aufzeichnen von Informationen in einem mobilen Endgerät, wobei die Vorrichtung Folgendes umfasst:
eine Beschleunigungserkennungseinheit (501) zum Erkennen einer Beschleunigung des mobilen Endgeräts;
eine Beschleunigungsfeststellungseinheit (502) zum Feststellen, ob die Beschleunigung eine voreingestellte Schwelle erreicht;
eine Aufzeichnungsfunktionsstarteinheit (503) zum Starten einer Aufzeichnungsfunktion des mobilen Endgeräts zum Aufzeichnen der Informationen, wenn die Beschleunigungsfeststellungseinheit feststellt, dass die Beschleunigung die voreingestellte Schwelle erreicht;
**gekennzeichnet durch** eine Anrufzustandsfeststellungseinheit (504) zum Feststellen, ob das mobile Endgerät in einem Anrufzustand ist;
wobei die Aufzeichnungsfunktionsstarteinheit (503) Folgendes umfasst:
eine erste Startsubeinheit zum Starten einer Audioaufzeichnungsfunktion des mobilen Endgeräts zum Aufzeichnen von Audioinformationen auf beiden Seiten des Anrufs, wenn das mobile Endgerät im Anrufzustand ist; und
eine zweite Startsubeinheit zum Starten einer Audioeingabevorrichtung des mobilen Endgeräts und zum Starten der Aufzeichnungsfunktion des mobilen Endgeräts zum Aufzeichnen der von der Audioeingabevorrichtung empfangenen Audioinformation.

9. Vorrichtung nach Anspruch 8, die ferner Folgendes umfasst:
eine erste Speichereinheit zum Speichern der aufgezeichneten Informationen nach Ende des Anrufs.

10. Vorrichtung nach Anspruch 8 oder 9, die ferner Folgendes umfasst:
eine zweite Speichereinheit zum Stoppen des Aufzeichnens nach einer voreingestellten ersten Zeitschwelle ab einem Beginn der Aufzeichnung, und Speichern der aufgezeichneten Informationen; oder
eine dritte Speichereinheit zum Stoppen des Aufzeichnens, wenn eine Reststrommenge des mobilen Endgeräts niedriger ist als eine voreingestellte Strommengenschwelle, und Speichern der aufgezeichneten Information.

11. Vorrichtung nach Anspruch 9 oder 10, die ferner Folgendes umfasst:
eine Sendeeinheit zum Senden der gespeicherten Information zu einer voreingestellten Position.

12. Vorrichtung nach einem der Ansprüche 9-11, die ferner Folgendes umfasst:
eine Erinnerungseinheit zum Senden einer Erinnerungsnachricht, ob die Information zu einem Benutzer zu senden ist, und Auslösen eines Vorgangs des Sendens der gespeicherten Information zu der voreingestellten Position, wenn der Benutzer wählt, die Information zu senden oder wenn innerhalb einer voreingestellten zweiten Zeitschwelle keine Auswahlnachricht vom Benutzer empfangen wird.

13. Computerprogramm, das bei Abarbeitung auf einem Prozessor eines mobilen Endgeräts nach Anspruch 8 ein Verfahren nach einem der Ansprüche 1-7 ausführt.

## Revendications

1. Procédé d'enregistrement d'informations dans un terminal mobile, **caractérisé en ce que** le procédé comprend :
détecter une accélération (S101) du terminal mobile ;
déterminer (S 102) si l'accélération atteint un seuil d'accélération préréglé ; et
lancer (S103) une fonction d'enregistrement du terminal mobile pour enregistrer les informations si l'accélération atteint le seuil d'accélération préréglé ;
caractérisé en déterminant (S202) si le terminal mobile est dans un état d'appel ;
dans lequel, l'étape consistant à lancer la fonction d'enregistrement du terminal mobile pour enregistrer les informations comprend :
si le terminal mobile est dans l'état d'appel, lancer une fonction d'enregistrement audio du terminal mobile pour enregistrer des informations des deux côtés de l'appel ;
si le terminal mobile n'est pas dans l'état d'appel, lancer un dispositif d'entrée audio du terminal mobile, et lancer la fonction d'enregistrement audio du terminal mobile pour enregistrer les informations audio reçues par le dispositif d'entrée audio.

2. Procédé selon la revendication 1, comprenant en outre :
sauvegarder les informations enregistrées après la fin de l'appel.

3. Procédé selon la revendication 1 ou 2, comprenant en outre :
arrêter l'enregistrement après un premier seuil de temps préréglé à partir d'un début de l'enregistrement et sauvegarder les informations enregistrées ; ou bien
arrêter l'enregistrement lorsqu'une quantité électrique résiduelle du terminal mobile est plus faible qu'un seuil de quantité électrique préréglé et sauvegarder les informations enregistrées.

4. Procédé selon l'une quelconque des revendications 1-3, comprenant en outre :
envoyer les informations sauvegardées à une position préréglée.

5. Procédé selon la revendication 1 ou 4, comprenant en outre :
envoyer un message de rappel pour savoir si envoyer les informations à un utilisateur, et si l'utilisateur sélectionne d'envoyer les informations ou bien si aucun message de sélection n'est reçu de l'utilisateur en l'espace d'un deuxième seuil de temps préréglé, déclencher une opération d'envoi des informations sauvegardées à la position préréglée.

6. Procédé selon la revendication 1, comprenant en outre :
sauvegarder les informations enregistrées après un troisième seuil de temps préréglé, à partir du début de l'enregistrement, et envoyer les informations sauvegardées à la position préréglée.

7. Procédé selon l'une quelconque des revendications 5-6, dans lequel l'étape consistant à envoyer les informations sauvegardées à la position préréglée comprend :
envoyer les informations sauvegardées à une boîte aux lettres désignée comme une pièce jointe ; ou bien
envoyer les informations sauvegardées à un terminal mobile désigné.

8. Appareil d'enregistrement d'informations dans un terminal mobile, l'appareil comprenant :
une unité de détection d'accélération (501) pour détecter une accélération du terminal mobile ;
une unité de détermination d'accélération (502) pour déterminer si l'accélération atteint un seuil d'accélération préréglé ;
une unité de lancement de fonction d'enregistrement (503) pour lancer une fonction d'enregistrement du terminal mobile pour enregistrer les informations si l'unité de détermination d'accélération détermine que l'accélération atteint le seuil d'accélération préréglé ;
**caractérisé par** une unité de détermination d'état d'appel (504) pour déterminer si le terminal mobile est dans un état d'appel ;
dans lequel, l'unité de lancement de fonction d'enregistrement (503) comprend :
une première sous-unité de lancement pour lancer une fonction d'enregistrement audio du terminal mobile pour enregistrer des informations audio des deux côtés de l'appel lorsque le terminal mobile est dans l'état d'appel ; et
une deuxième sous-unité de lancement pour lancer un dispositif d'entrée audio du terminal mobile et lancer la fonction d'enregistrement audio du terminal mobile pour enregistrer les informations audio reçues par le dispositif d'entrée audio.

9. Appareil selon la revendication 8, comprenant en outre :
une première unité de sauvegarde pour sauvegarder les informations enregistrées après la fin de l'appel.

10. Appareil selon la revendication 8 ou 9, comprenant en outre :
une deuxième unité de sauvegarde pour arrêter l'enregistrement après un premier seuil de temps préréglé à partir d'un début de l'enregistrement et sauvegarder les informations enregistrées ; ou bien
une troisième unité de sauvegarder pour arrêter l'enregistrement quand une quantité électrique résiduelle du terminal mobile est plus faible qu'un seuil de quantité électrique préréglé et sauvegarder les informations enregistrées.

11. Appareil selon la revendication 9 ou 10, comprenant en outre :
une unité d'envoi pour envoyer les informations sauvegardées à une position préréglée.

12. Appareil selon l'une quelconque des revendications 9-11, comprenant en outre :
une unité de rappel pour envoyer un message de rappel pour savoir si envoyer les informations à un utilisateur et déclencher une opération d'envoi des informations sauvegardées à la position préréglée si l'utilisateur sélectionne d'envoyer les informations ou bien si aucun message de sélection n'est reçu de l'utilisateur en l'espace d'un deuxième seuil de temps préréglé.

13. Programme informatique qui, lorsque s'exécutant sur un processeur d'un terminal mobile selon la revendication 8, met en oeuvre un procédé selon l'une quelconque des revendications 1-7.
